# EUROPÄISCHE PATENTSCHRIFT

(11) **EP 3 186 196 B1**
(45) Veröffentlichungstag und Bekanntmachung des Hinweises auf die Patenterteilung: **04.05.2022**
(21) Anmeldenummer: 15752975.1
(22) Anmeldetag: 05.08.2015
(51) Int. Cl.: C02F 1/32, C02F 1/36

(54) **VERFAHREN UND VORRICHTUNG ZUR AUFBEREITUNG VON EINER MIT INHALTSSTOFFEN BELASTETEN FLÜSSIGKEIT**
METHOD AND DEVICE FOR PREPARING A FLUID LOADED WITH INGREDIENTS
PROCÉDÉ ET DISPOSITIF DE PRÉPARATION D'UN LIQUIDE CHARGÉ EN INGRÉDIENTS

(30) Priorität: 28.08.2014 DE 102014217224
(43) Veröffentlichungstag der Anmeldung: 05.07.2017
(73) Patentinhaber: SKF Marine GmbH, 20457 Hamburg (DE)
(72) Erfinder: STREICH, Olaf, 22605 Hamburg (DE)
(74) Vertreter: Kuhstrebe, Jochen
(86) Internationale Anmeldenummer: PCT/EP2015/068053
(87) Internationale Veröffentlichungsnummer: WO 2016/030160

(56) Entgegenhaltungen:
- DE-A1-102010 005 893
- JP-A- 2007 245 097
- US-A- 4 400 270
- US-A- 4 661 264
- US-A1- 2010 326 114

## Beschreibung

Die Erfindung betrifft eine Vorrichtung zum Durchführen eines Verfahrens zur Aufbereitung einer mit Inhaltsstoffen belasteten Flüssigkeit nach dem Oberbegriff des Patentanspruchs 1, sowie eine Verwendung der Vorrichtung zur Aufbereitung einer mit Inhaltsstoffen belasteten Flüssigkeit gemäß Patentanspruch 4.

Zur Behandlung von mit Feststoffen oder Mikroorganismen belasteten Flüssigkeiten werden verschiedene chemische und physikalische Verfahren eingesetzt. Insbesondere im Bereich der physikalischen Verfahren werden Filter und Fliehkraftabscheider eingesetzt, um unerwünschte Bestandteile einer Flüssigkeit abzutrennen. Damit Mikroorganismen nicht nur abgeschieden oder gefiltert, sondern auch abgetötet werden, findet häufig eine Bestrahlung mit Ultraschallwellen oder Ultraviolettlicht (UV) statt.

Aus der DE202012009220U1 ist ein Fliehkraftabscheider bekannt, der eine mit Kleinstlebewesen belastete Flüssigkeit beim Eintreten in einen Reaktorbehälter mit Ultraschall beaufschlägt. Dabei ist eine Ultraschall-Sonotrode frontal im Einflussbereich angeordnet und dient als Führungselement. Die Flüssigkeit wird zwischen der Ultraschall-Sonotrode und der Wandung des Fliehkraftabscheiders geführt und aktiv oder passiv in Rotation versetzt. Die mit Ultraschall behandelten dichteren Bestandteile der Flüssigkeit werden dabei radial in den Randbereich des Fliehkraftabscheiders verdrängt und abgeschieden.

Neben der schwierigen technischen Umsetzung dieses Fliehkraftabscheiders ist die Verweilzeit der jeweiligen Flüssigkeit in dem beschriebenen Ultraschallbereich kurz. Darüber hinaus muss für eine effiziente Behandlung die belastete Flüssigkeit zumindest eine definierte Zeit lang einem Ultraschallwellenfeld ausgesetzt sein. Damit die beschriebene Vorrichtung effektiv Kleinstlebewesen abtöten kann, muss die Sonotrode eine hohe Leistung aufweisen oder das in den Fliehkraftabscheider zufließende Flüssigkeitsvolumen gering sein.

Die EP2199260A1 zeigt eine rohrförmige Vorrichtung zur Aufbereitung von belasteten Flüssigkeiten. Dabei durchströmt die eingeleitete Flüssigkeit einen Reaktorbehälter und wird während der Durchströmung mit Ultraschallwellen und Ultraviolettstrahlen beaufschlagt. Die Anordnung der Ultraschall-Sonotroden und der UV-Strahler wird dabei so gewählt, dass die durchströmende Flüssigkeit die UV-Strahler umfließen muss und durch Ultraschallwellen turbulent wird. Bei dieser Möglichkeit der Aufbereitung einer belasteten Flüssigkeit muss die Flüssigkeit jedoch in einem weiteren Verfahrensschritt von den Feststoffen oder den abgetöteten Mikroorganismen getrennt werden. Darüber hinaus verändert sich die Konzentration der Bestandteile der Flüssigkeit entlang der Vorrichtung aus EP2199260A1. Hierdurch geht viel Leistung verloren, da durch die Turbulenzen eine eindeutige ortsabhängige Behandlung der Flüssigkeit nicht möglich ist.

Weiterer Stand der Technik ist unter anderem aus den Druckschriften DE202012009221, DE102012018996, DE102012018995, JP 2007 245 097 A, US 4 661 264 A, US 2010/ 326 114 A1 und US 4 400 270 A bekannt.

Aufgabe der Erfindung ist es, eine Vorrichtung ohne die genannten Nachteile zu schaffen, welches eine effektive Behandlung einer mit Inhaltsstoffen belasteten Flüssigkeit ermöglicht. Weiterhin ist es Aufgabe der Erfindung, eine Verwendung der erfindungsgemäßen Vorrichtung zu schaffen.

Diese Aufgabe wird durch eine Vorrichtung mit den Merkmalen des Patentanspruchs 1 und durch eine Verwendung mit den Merkmalen des Patentanspruchs 4 gelöst.

Bei einem Verfahren zur Aufbereitung einer mit Inhaltsstoffen belasteten Flüssigkeit wird die belastete Flüssigkeit in einem Reaktorbehälter in eine kreisförmige Bewegung versetzt und mit Ultraschallwellen und/oder Ultraviolettstrahlung bestrahlt. Hierbei wird eine lokale Bestrahlungsintensität einer spezifischen Konzentration der Inhaltsstoffe in der Flüssigkeit angepasst, wobei in einem Bereich mit einer hohen spezifischen Konzentration die lokale Bestrahlungsintensität höher als in einem Bereich mit einer geringen spezifischen Konzentration eingestellt wird.

Es wurde erkannt, dass sich durch Versetzen der Flüssigkeit mit den darin enthaltenen Inhaltsstoffen in Rotation eine unter anderem vom Reaktorbehälter und der Durchflussrichtung abhängige und größtenteils vorherzusehende spezifische Konzentrationsverteilung der Inhaltsstoffe im Reaktorbehälter einstellt. Je nach Rotationsgeschwindigkeit und Dichte der Flüssigkeit und der Inhaltsstoffe, die sich in der eingeleiteten Flüssigkeit befinden, werden die Inhaltsstoffe während der Rotation unterschiedlich stark in einen Randbereich des Reaktorbehälters verdrängt. Durch die Bestrahlung in Abhängigkeit von der spezifischen Konzentrationsverteilung kann deshalb eine effiziente Anpassung an die Betriebsbedingungen und damit an die spezifische Konzentrationsverteilung im Reaktorbehälter erfolgen.

Bei einem vorteilhaften Ausführungsbeispiel wird eine Bestrahlungstiefe der lokalen Bestrahlungsintensität bei einer hohen spezifischen Konzentration der Inhaltsstoffe kleiner als bei geringer spezifischer Konzentration eingestellt. Abhängig von der Rotationsgeschwindigkeit der belasteten Flüssigkeit wirkt auf deren Inhaltsstoffe eine radial von einer (quasi) Drehachse der Rotationsbewegung weg, also radial nach außen gerichtete Fliehkraft, sodass die spezifische Konzentration der Inhaltsstoffe der mit den Inhaltsstoffen belasteten Flüssigkeit zum Rand des Reaktorbehälters hin zunimmt. Insbesondere im Einfließbereich der belasteten Flüssigkeit sind die Inhaltsstoffe relativ gleichmäßig verteilt und demnach in einer kleinen spezifischen Konzentration vorliegend. Hierbei ist es vorteilhaft, die Bestrahlungsintensität niedrig einzustellen, jedoch möglichst tief in Richtung der Drehachse der Rotationsbewegung der Flüssigkeit wirken zu lassen. Im Bereich des Auslasses wirkt auf die Inhaltsstoffe für eine definierte Zeit eine Zentrifugalkraft. Die Inhaltsstoffe sind in den äußeren Randbereichen der in Rotation versetzten belasteten Flüssigkeit vorzufinden, sodass eine möglichst hohe Bestrahlungsintensität, die in ihrer unmittelbaren Nähe wirkt, optimale Ergebnisse erzielt. Zwischen diesen beiden Zuständen herrscht eine kontinuierliche Änderung der spezifischen Konzentration, sodass die Bestrahlungsintensität entsprechend dieser physikalischen Gesetzesmäßigkeit eingestellt und optimiert werden kann.

Gemäß einer weiteren vorteilhaften Ausführung ist die Bestrahlung radial vom Rand des Reaktorbehälters nach innen auf die Drehachse der belasteten Flüssigkeit im Reaktorbehälter gerichtet. Durch diese Maßnahme können die Ultraschall-Sonotroden bzw. UV-Strahler an oder in den Wänden des Reaktorbehälters besonders einfach angebracht werden.

Gemäß einem vorteilhaften Ausführungsbeispiel wird die mit Inhaltsstoffen belastete Flüssigkeit tangential in den Reaktorbehälter hinein- und/oder aus dem Reaktorbehälter ausgeleitet. Diese Maßnahme ermöglicht ein passives Versetzen der eingeleiteten Flüssigkeit in Rotation ohne Zuhilfenahme von aktiv angetriebenen Einrichtungen.

Eine erfindungsgemäße Vorrichtung zum Durchführen eines Verfahrens zur Aufbereitung einer mit Inhaltsstoffen belasteten Flüssigkeit umfasst einen zylinderförmigen Reaktorbehälter zum Führen der Flüssigkeit, eine Zuleitung in Form eines Einlasses und eine Ausleitung in Form eines Auslasses zum Zuführen bzw. Abführen der Flüssigkeit und am oder im Reaktorbehälter angeordnete, in den Reaktorbehälter hinein gerichtete Strahlungsquellen zum Erzeugen von Ultraschallwellen und/oder UV-Strahlen mit einer lokalen Bestrahlungsintensität. Erfindungsgemäß weist die Vorrichtung zum Einstellen der lokalen Bestrahlungsintensität eine sich in Richtung einer Zylinderachse und/oder in einer Umfangsrichtung ändernde Strahlungsquellendichte auf, wobei der vertikale und/oder umfangsseitige Abstand der Strahlungsquellen zueinander vom Einlass in Richtung Auslass abnimmt, so dass die lokale Bestrahlungsintensität einer spezifischen Konzentration der Inhaltsstoffe in der Flüssigkeit angepasst ist, wobei bei einer hohen spezifischen Konzentration die lokale Bestrahlungsintensität höher als bei einer geringen spezifischen Konzentration ist.

Erfindungsgemäß ist der Reaktorbehälter zylinderförmig ausgeführt und hat vorzugsweise tangential an seiner Mantelfläche angeordnete Ein - und Ausleitungen zum Versetzen der belasteten Flüssigkeit in eine Rotationsbewegung. Die Strahlungsquellen erzeugen Ultraschallwellen und/oder UV-Strahlen mit einer definierten Bestrahlungsleistung bzw. Bestrahlungsintensität und beaufschlagen damit die den Reaktorbehälter durchströmende Flüssigkeit. Durch das tangentiale Anordnen der Ein - und Ausleitungen wird die Flüssigkeit in Rotation versetzt, sodass sich eine definierte spezifische Konzentrationsverteilung der in der Flüssigkeit enthaltenen Feststoffe und Mikroorganismen einstellt. Die spezifische Konzentrationsverteilung kann sowohl Konzentration pro Volumen als auch Konzentration pro Masse sein und beschreibt die Konzentration der Inhaltsstoffen in der Flüssigkeit bezogen auf einen infinitesimalen räumlichen Ausschnitt der Flüssigkeit im Reaktorbehälter. Die sich einstellende spezifische Konzentration im Reaktorbehälter ist proportional abhängig von der Rotationsgeschwindigkeit und der Rotationsdauer der belasteten Flüssigkeit. Auf die in der belasteten Flüssigkeit enthaltenen Inhaltsstoffe muss demnach für eine bestimmte Zeitdauer eine Fliehkraft wirken, damit die Inhaltsstoffe in den Randbereich des Reaktorbehälters verdrängt werden. Diese Zeitdauer kann durch eine höhere Rotationsgeschwindigkeit und damit durch höhere Fliehkräfte reduziert werden. Dadurch stellt sich in den Bereichen mit hoher Rotationsgeschwindigkeit bzw. nach einer relativ langen Rotationsdauer eine hohe spezifische Konzentration in Randbereichen des Reaktorbehälters ein. Damit die belastete Flüssigkeit effektiv behandelt wird, sind die Strahlungsquellen in ihrer Bestrahlungsleistung bzw. Bestrahlungsintensität an die Rotationsgeschwindigkeit bzw. auf die Verweildauer der Inhaltsstoffe im Reaktorbehälter und damit an die spezifische Konzentration der Inhaltsstoffen in der belasteten Flüssigkeit angepasst. Hierdurch kann die zum Behandeln der belasteten Flüssigkeit benötigte Energie exakt dosiert werden, sodass die Effizienz der Anlage steigt. Vorzugsweise sind die Strahlungsquellen an oder in der mantelflächenseitigen Wandung (Reaktorwand) des Reaktorbehälters angebracht. Die Strahlungsquellen können jedoch auch im Reaktorbehältervolumen oder in den Ein- und Ausleitungen angeordnet sein.

Bei einem Ausführungsbeispiel wird die Bestrahlungsintensität durch gleiche Strahlungsquellen mit einer sich in Richtung der Drehachse ändernden Strahlungsquellendichte eingestellt. Durch diese Maßnahme wird die Bestrahlungsintensität der an der Reaktorwand angeordneten Strahlungsquellen durch eine erhöhte Anzahl an Strahlungsquellen realisiert. Bei dieser Ausführung werden die Abstände der Strahlungsquellen zu einander entlang der Drehachse der Rotation der Flüssigkeit, d.h. in vertikaler Richtung kleiner, sodass die Reaktorwand in diesem Bereich mehr Strahlungsquellen aufnehmen kann.

Gemäß einem weiteren Ausführungsbeispiel ist die lokale Bestrahlungsintensität durch gleiche Strahlungsquellen mit einer sich in Umfangsrichtung ändernden Strahlungsquellendichte eingestellt. Durch diese Maßnahme werden die Abstände der Strahlungsquellen zu einander entlang des Umfangs der Mantelfläche des Reaktorbehälters kleiner, sodass die Reaktorwand in diesem Bereich mehr Strahlungsquellen aufnehmen kann und dadurch die Bestrahlungsintensität bereichsweise steigt.

Gemäß einem Ausführungsbeispiel ist die lokale Bestrahlungsintensität durch Strahlungsquellen mit unterschiedlichen Leistungen eingestellt. Eine Einstellung der Bestrahlungsintensität durch die Anzahl an Strahlungsquellen kann lediglich bei einem Herstellungsprozess des Reaktorbehälters erfolgen. Insbesondere wenn eine flexible Anpassung der Bestrahlungsintensität notwendig ist, ist es vorteilhaft, die Leistung der einzelnen Strahlungsquellen manuell oder automatisch an die jeweiligen spezifischen Konzentrationen der Flüssigkeit im Reaktorbehälter anpassen zu können.

Bei einer vorteilhaften Ausführung ist die lokale Bestrahlungsintensität durch Strahlungsquellen mit unterschiedlichen Leistungen und mit einer sich in Umfangsrichtung und/oder in Richtung der Drehachse ändernden Strahlungsquellendichte eingestellt. Durch diese Maßnahme wird die größtmögliche Flexibilität bei der Behandlung einer mit Inhaltsstoffen belasteten Flüssigkeit erreicht.

Gemäß einem Ausführungsbeispiel sind in Einbaulage des Reaktorbehälters die Einleitung oben und die Ausleitung unten am Reaktorbehälter angeordnet oder umgekehrt. Hierdurch wird die eingeleitete Flüssigkeit kreisförmig durch das gesamte Volumen des Reaktorbehälters geleitet, sodass die gesamte Reaktorwand für die Behandlung der Flüssigkeit mittels Ultraschall und/oder UV-Strahlen genutzt werden kann. Bevorzugterweise sind die Ein- und/oder Ausleitungen tangential an der Reaktorwand angeordnet, sodass bereits durch diese Anordnung eine eingeleitete Flüssigkeit ohne weitere Hilfsmittel in Rotation versetzt wird.

Sonstige vorteilhafte Ausführungsbeispiele sind Gegenstand weiterer Unteransprüche.

Im Folgenden werden anhand von stark vereinfachten schematischen Darstellungen bevorzugte Ausführungsbeispiele der Erfindung näher erläutert. Es zeigen:
- Figur 1: einen Längsschnitt eines ersten nicht erfindungsgemäßen Ausführungsbeispiels,
- Figur 2: einen Längsschnitt eines zweiten, erfindungsgemäßen Ausführungsbeispiels,
- Figur 3: einen Längsschnitt eines dritten, erfindungsgemäßen Ausführungsbeispiels,
- Figur 4: einen Querschnitt des ersten Ausführungsbeispiels, und
- Figur 5: einen Querschnitt eines vierten Ausführungsbeispiels.

In der Zeichnung weisen dieselben konstruktiven Elemente jeweils dieselbe Bezugsziffer auf.

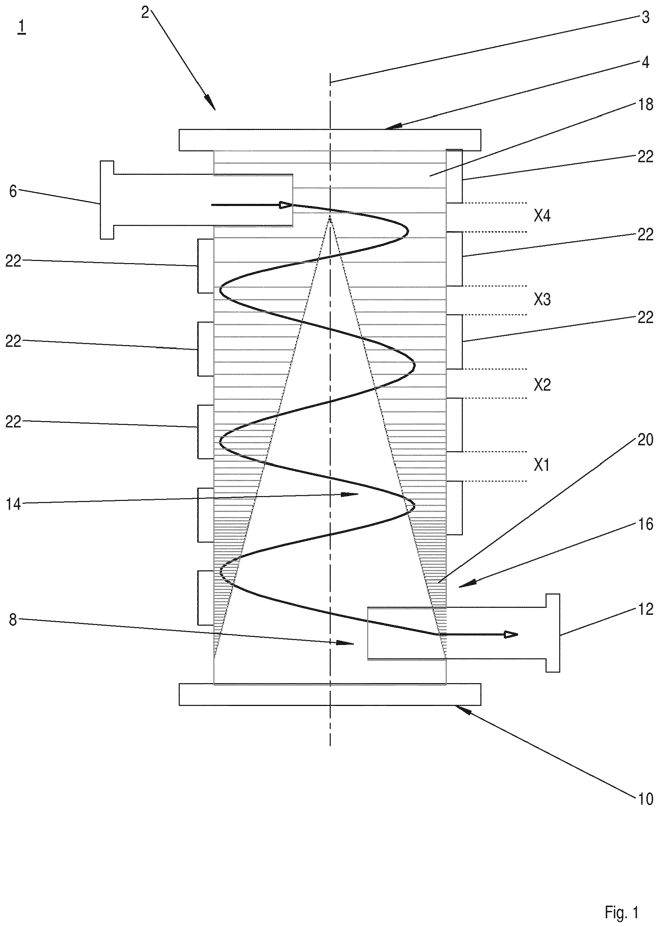

Figur 1 zeigt einen Längsschnitt durch eine Vorrichtung 1 zur Aufbereitung einer mit Inhaltsstoffen belasteten Flüssigkeit 8. Die Vorrichtung 1 eignet sich beispielsweise zur Behandlung von Ballastwasser bei Wasserfahrzeugen wie Containerschiffen. Die Vorrichtung 1 hat hier einen zylinderförmigen Reaktorbehälters 2 zur Aufnahme der Flüssigkeit 8.

Der Reaktorbehälter 2 hat einen Innenraum, der von einem zylinderförmigen Reaktormantel bzw. Reaktorwand 16, einen Reaktordeckel 4 und einen Reaktorboden 10 begrenzt wird. Der Reaktorbehälter 2 ist grundsätzlich rotationssymmetrisch zu seiner Zylinderachse 3. Im Bereich des Reaktordeckels 4 weist der Reaktorbehälter 2 einen Einlass 6 auf, der tangential in den Innenraum mündet. Durch den Einlass 4 kann eine Flüssigkeit 8 in den Reaktorbehälter 2 hinein geleitet werden. Im Bereich des Reaktorbodens 10 ist ein Auslass 12 angeordnet, der sich tangential aus dem Innenraum hinaus erstreckt und es der Flüssigkeit 8 ermöglicht, aus dem Reaktorbehälter 2 hinaus zu fließen.

An dem Reaktormantel 16 sind Strahlungsquellen 22 zum Zerstören von Inhaltstoffen bzw. Entkeimen der Flüssigkeit 8 angeordnet. Sie sind bei diesem Ausführungsbeispiel gleichmäßig in Umfangsrichtung und in Richtung der Zylinderachse 3 verteilt und dabei in radialer Richtung auf die Zylinderachse 3 gerichtet. Die Strahlungsquellen 22 sind in diesem Ausführungsbeispiel als Ultraschall-Sonotroden ausgeführt, können jedoch auch UV-Lampen sein oder vergleichbare Geräte zur Erzeugung von Ultraschallwellen und/oder Ultraviolettstrahlung. Die Strahlungsquellen 22 sind hierbei in umfangseitigen Reihen angeordnet, die vertikal zueinander einen definierten gleichen Abstand x1=x2=x3=x4 aufweisen.

Der Reaktorbehälter 2 wird kontinuierlich von der Flüssigkeit 8 durchströmt, wobei die Flüssigkeit 8 aufgrund der tangentialen Anordnung des Einlasses 6 und des Auslasses 12 in Rotation 14 versetzt wird. Der Flüssigkeit 8 und damit den Inhaltsstoffen wird somit eine Drehbewegung aufgezwungen. Die Zylinderachse 3 entspricht bei einem zylinderförmig ausgebildeten Reaktorbehälter 2 der Drehachse 3 der in Rotation 14 versetzten eingeleiteten Flüssigkeit 8. Aufgrund einer infolge der Drehbewegung auf die Inhaltsstoffe wirkenden Fliehkraft werden die in der Flüssigkeit 8 enthaltenen Inhaltsstoffe radial nach außen in Richtung einer Reaktorwand 16 des Reaktorbehälters 2 getrieben. Folglich entsteht eine von der Rotationsgeschwindigkeit und einer Rotationsdauer der Flüssigkeit 8 abhängige Verdrängung der in der Flüssigkeit enthaltenen Inhaltsstoffe (wie Feststoffe oder Mikroorganismen) an die Reaktorwand 16 des Reaktorbehälters 2. Die spezifische Konzentration der Inhaltsstoffe in der Flüssigkeit 8 nahe der mantelflächenseitigen Wand 16 ist somit nahe dem Einlass 6 niedrig 18 und im Bereich des Auslasses 12 hoch 20. Die Strahlungsquellen 22 sind dabei im Bereich mit hoher spezifischer Konzentration 20 an Inhaltsstoffen in der Flüssigkeit 8 leistungsfähiger ausgeführt als in Bereichen mit niedriger spezifischer Konzentration 18. Dadurch werden Bereiche mit hoher spezifischer Konzentration 20 mit einer höheren Bestrahlungsintensität beaufschlagt (bestrahlt) als Bereiche mit niedriger spezifischer Konzentration 18 an Inhaltsstoffen in der Flüssigkeit 8. Die Leistung der Strahlungsquellen steigt daher gemäß dem Ausführungsbeispiel in Richtung des Reaktorbodens 10 kontinuierlich an.

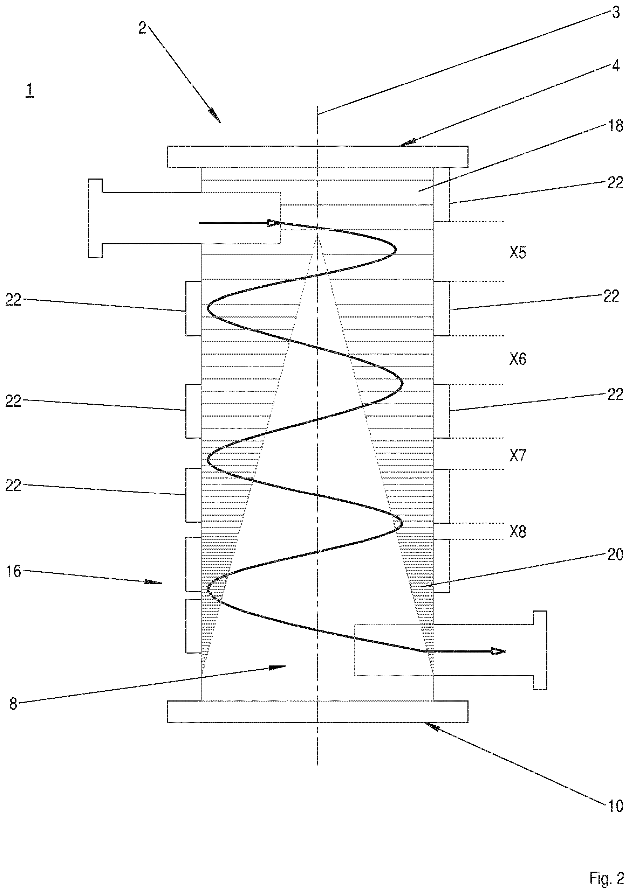

In Figur 2 ist ein Längsschnitt des zylinderförmigen Reaktorbehälters 2 entlang seiner Zylinderachse 3 gemäß einem zweiten, erfindungsgemäßen Ausführungsbeispiel gezeigt. Der wesentliche Unterschied zum ersten Ausführungsbeispiel besteht darin, dass die an der Reaktorwand 16 in umfangsseitigen Reihen angeordneten Strahlungsquellen 22 einen sich ändernden vertikalen Abstand zueinander aufweisen. Bei dem zweiten Ausführungsbeispiel nimmt der vertikale Abstand x5-x8 der Strahlungsquellen 22 zueinander zu dem Reaktorboden 10 des Reaktorbehälters 2 hin ab. Folglich ergibt sich die Relation x5>x6>x7>x8. Die den Reaktorbehälter 2 passierende Flüssigkeit 8 wird hierdurch mit einer variierenden Bestrahlungsintensität entlang der vertikalen Ausdehnung des Reaktorbehälters 2 beaufschlagt. Die variierende Bestrahlungsintensität der Strahlungsquellen 22 ist an die spezifische Konzentration 18, 20 (Schraffierung) der Inhaltsstoffe in der Flüssigkeit 8 in der unmittelbaren Nähe der Reaktorwand 16 angepasst. Je höher die spezifische Konzentration der Inhaltsstoffe in der Flüssigkeit 8, desto mehr Strahlungsquellen 22 beaufschlagen diese mit Ultraschallwellen und/oder UV-Strahlung und umgekehrt. Die Bestrahlungsintensität ist dabei proportional zu der Anzahl an Strahlungsquellen 22.

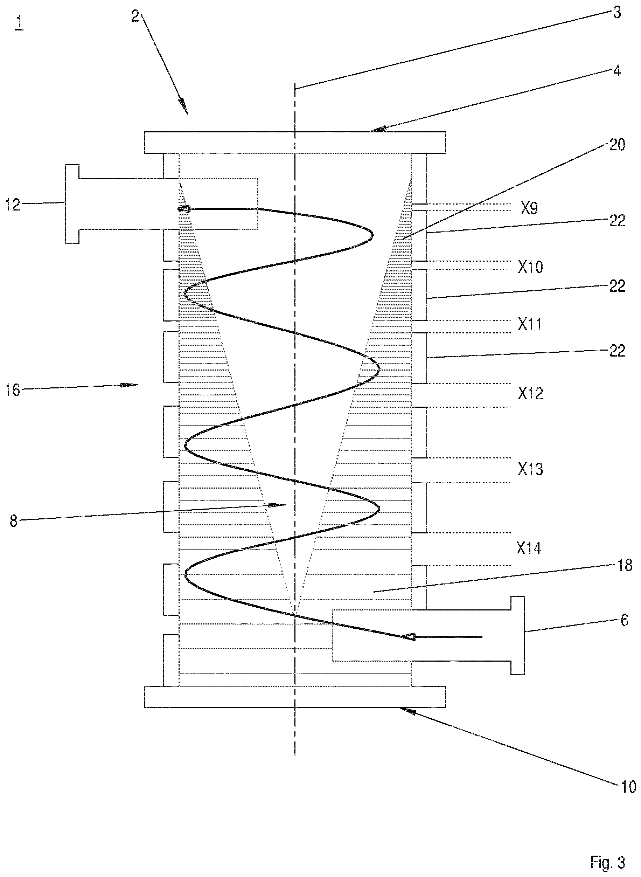

Figur 3 veranschaulicht einen Längsschnitt des zylinderförmigen Reaktorbehälters 2 entlang seiner Zylinderachse 3 gemäß einem dritten, erfindungsgemäßen Ausführungsbeispiel. Insbesondere besteht ein Unterschied zu dem ersten und dem zweiten Ausführungsbeispiel in der vertauschten Anordnung des Einlasses 6 und des Auslasses 12. Die Flüssigkeit 8 gelangt hierbei im Bereich der Grundplatte 10 in den Reaktorbehälter 2 und verlässt diesen im Bereich des Reaktordeckels 4. Dementsprechend steigt die spezifische Konzentration 18, 20 der Inhaltsstoffe in der Flüssigkeit 8 in der Nähe der Reaktorwand 16 vertikal in Richtung des Reaktordeckels 4 an. Angepasst an diese spezifische Konzentrationsverteilung sind die an der Reaktorwand 16 angeordneten Strahlungsquellen 22. Die vertikalen Abstände x9-x14 der Strahlungsquellen 22 zueinander nehmen mit einer Abnahme der spezifischen Konzentration in Richtung des Reaktorbodens 10 zu. Bei dem dritten Ausführungsbeispiel ergibt sich daher ein relatives Verhältnis der Abstände x9<x10<x11<x12<x13<x14 zueinander.

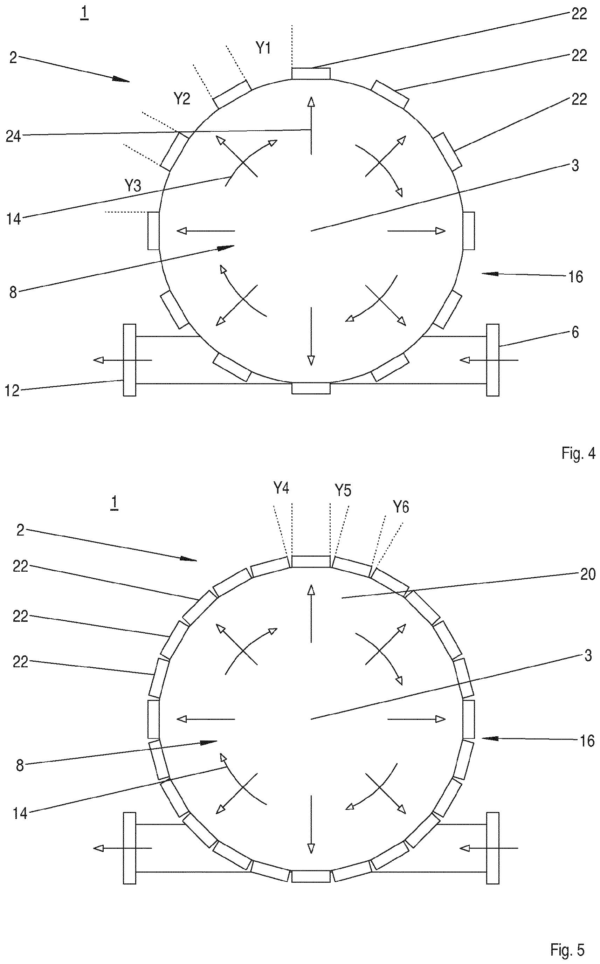

In Figur 4 ist das erste Ausführungsbeispiel im Querschnitt des Reaktorbehälters 2 senkrecht zu seiner Zylinderachse 3 veranschaulicht. Die Strahlungsquellen 22 sind in vertikaler Richtung auf einer Ebene an der Reaktorwand 16 umfangsseitig angeordnet. Die Strahlungsquellen 22 haben einen gleichbleibenden Abstand y1=y2=y3 in Umfangsrichtung zueinander und sind radial in Richtung der Zylinderachse 3 in den Reaktorbehälter 2 hinein ausgerichtet. Die am tangential angeordneten Einlass 6 eingeleitete, mit Inhaltsstoffen belastete Flüssigkeit 8 wird in Rotation 14 versetzt. Beim vertikalen Durchströmen des Reaktorbehälters 2 werden die Inhaltsstoffe der belasteten Flüssigkeit 8 zunehmend stärker in Richtung der Reaktorwand 16 verdrängt.

Figur 5 zeigt ein viertes, erfindungsgemäßes Ausführungsbeispiel im Querschnitt des Reaktorbehälters 2; der Querschnitt verläuft dabei senkrecht zur Zylinderachse 3 in einer vertikalen Ebene des Reaktorbehälters 2 in unmittelbarer Nähe zu der Reaktorwand 16, an der sich eine hohe spezifische Konzentration an Inhaltsstoffen 20 in der Flüssigkeit 8 einstellt. Bei diesem Ausführungsbeispiel wird die Bestrahlungsintensität ebenfalls durch eine höhere Anzahl an Strahlungsquellen 22 realisiert, jedoch sind diese nicht vertikal näher zueinander angeordnet, sondern umfangsseitig. Die umfangsseitigen Abstände y4=y5=y6 der Strahlungsquellen 22 zueinander sind dabei kleiner als in einer vertikalen Ebene des Reaktorbehälters 2 mit einer geringeren spezifischen Konzentration an Inhaltsstoffen 18 in der Flüssigkeit 8. Analog zum zweiten Ausführungsbeispiel können beim vierten Ausführungsbeispiel jedoch auch die vertikalen Abstände der Strahlungsquellen 22 zueinander variieren.

Beschrieben wird ein Verfahren zur Aufbereitung einer mit Inhaltsstoffen belasteten Flüssigkeit 8. Diese wird in einem Reaktorbehälter 2 in eine kreisförmige Bewegung 14 versetzt und mit Ultraschallwellen und/oder Ultraviolettstrahlung 22 beaufschlagt. Eine lokale Bestrahlungsintensität wird einer spezifischen Konzentration 18, 20 der Inhaltsstoffe in der Flüssigkeit angepasst, wobei bei einer hohen spezifischen Konzentration 18, 20 die lokale Bestrahlungsintensität höher als bei einer geringen spezifischen Konzentration ist. Offenbart wird eine Vorrichtung 1 zum Durchführen eines Verfahrens zur Aufbereitung einer mit Inhaltsstoffen belasteten Flüssigkeit.

### Bezugszeichenliste

- 1: Vorrichtung
- 2: Reaktorbehälter
- 3: Zylinderachse bzw. Drehachse
- 4: Reaktordeckel
- 6: Einlass
- 8: mit Inhaltsstoffen belastete Flüssigkeit
- 10: Reaktorboden
- 12: Auslass
- 14: Rotationsrichtung der Flüssigkeit
- 16: Reaktorwand
- 18: Bereich geringer spezifischer Konzentration
- 20: Bereich hoher spezifischer Konzentration
- 22: Strahlungsquelle
- 24: Verdrängungsrichtung der Inhaltsstoffe

- x: Abstände in Richtung der Drehachse
- y: Umfangseitige Abstände

## Patentansprüche

1. Vorrichtung (1) zum Durchführen eines Verfahrens zur Aufbereitung einer mit Inhaltsstoffen belasteten Flüssigkeit (8), wobei die Vorrichtung umfasst:
einen zylinderförmigen Reaktorbehälter (2) zum Führen der Flüssigkeit im Kreis, eine Zuleitung in Form eines Einlasses (6) und eine Ausleitung in Form eines Auslasses (12) zum Zuführen bzw. Abführen der Flüssigkeit (8); und
am oder im Reaktorbehälter (2) angeordnete, in den Reaktorbehälter (2) hinein gerichtete Strahlungsquellen (22) zum Erzeugen von Ultraschallwellen und/oder UV-Strahlen mit einer lokalen Bestrahlungsintensität,
**dadurch gekennzeichnet, dass**
die Vorrichtung zum Einstellen der lokalen Bestrahlungsintensität eine sich in Richtung einer Zylinderachse (3) und/oder in einer Umfangsrichtung ändernde Strahlungsquellendichte aufweist, wobei der vertikale und/oder umfangsseitige Abstand der Strahlungsquellen zueinander vom Einlass (6) in Richtung des Auslasses (12) abnimmt, so dass
die lokale Bestrahlungsintensität einer spezifischen Konzentration (18, 20) der Inhaltsstoffen in der Flüssigkeit (8) angepasst ist, wobei bei einer hohen spezifischen Konzentration (20) die lokale Bestrahlungsintensität höher als bei einer geringen spezifischen Konzentration (18) ist.

2. Vorrichtung nach Anspruch 1, die zum Einstellen der lokalen Bestrahlungsintensität Strahlungsquellen (22) mit unterschiedlichen Leistungen umfasst.

3. Vorrichtung nach einem der Ansprüche 1 oder 2, wobei in Einbaulage des Reaktorbehälters (2) der Einlass (6) deckelflächenseitig und der Auslass (12) grundflächenseitig oder umgekehrt am Reaktorbehälter (2) angeordnet sind.

4. Verwendung der Vorrichtung nach einem der Ansprüche 1 bis 3 zur Aufbereitung einer mit Inhaltsstoffen belasteten Flüssigkeit (8).

## Claims

1. Device (1) for carrying out a method for preparing a liquid (8) loaded with ingredients, the device comprising:
a cylindrical reactor vessel (2) for making the liquid follow a circular motion, a supply line in the form of an inlet (6) and a discharge line in the form of an outlet (12) for supplying and discharging the liquid (8); and
radiation sources (22), arranged on or in the reactor vessel (2), directed into the reactor vessel (2) and intended for generating ultrasonic waves and/or UV rays with a local irradiation intensity,
**characterized in that**
for setting the local irradiation intensity, the device has a density of the radiation sources that changes in the direction of a cylinder axis (3) and/or in a circumferential direction, wherein the vertical and/or circumferential distance of the radiation sources from one another decreases from the inlet (6) in the direction of the outlet (12), so that the local irradiation intensity is adapted to a specific concentration (18, 20) of the ingredients in the liquid (8), wherein the local irradiation intensity is higher in the case of a high specific concentration (20) than in the case of a low specific concentration (18).

2. Device according to Claim 1, which for setting the local irradiation intensity comprises radiation sources (22) with different power outputs.

3. Device according to either of Claims 1 and 2, wherein, in the fitted position of the reactor vessel (2), the inlet (6) is arranged on the reactor vessel (2) on the top surface side and the outlet (12) is arranged on the reactor vessel (2) on the bottom surface side, or vice versa.

4. Use of the device according to one of Claims 1 to 3 for preparing a liquid (8) loaded with ingredients.

## Revendications

1. Dispositif (1) destiné à mettre en œuvre un procédé de traitement d'un liquide (8) chargé en substances, le dispositif comprenant :
un récipient de réacteur cylindrique (2) destiné à faire circuler le liquide, une conduite d'acheminement se présentant sous la forme d'une entrée (6) et une conduite de sortie se présentant sous la forme d'une sortie (12), lesquelles sont destinées à acheminer et évacuer le liquide (8), respectivement ; et
des sources de rayonnement (22) disposées sur ou dans le récipient de réacteur (2), dirigées dans le récipient de réacteur (2) et destinées à générer des ondes ultrasonores et/ou des rayons UV avec une intensité de rayonnement locale,
**caractérisé en ce que**
le dispositif de réglage de l'intensité de rayonnement locale a une densité de source de rayonnement qui varie dans la direction d'un axe de cylindre (3) et/ou dans une direction circonférentielle, la distance verticale et/ou circonférentielle entre les sources de rayonnement diminuant depuis l'entrée (6) en direction de la sortie (12) de sorte que
l'intensité de rayonnement locale est adaptée à une concentration spécifique (18, 20) des substances contenues dans le liquide (8), l'intensité de rayonnement locale étant plus élevée à une concentration spécifique élevée (20) qu'à une concentration spécifique faible (18).

2. Dispositif selon la revendication 1, comprenant des sources de rayonnement (22) de différentes puissances pour régler l'intensité de rayonnement locale.

3. Dispositif selon l'une des revendications 1 et 2, lorsque le récipient de réacteur (2) est installé, l'entrée (6) étant disposée du côté de la surface de couvercle, et la sortie (12) étant disposée du côté de la surface de fond, sur le récipient du réacteur (2) ou inversement.

4. Utilisation du dispositif selon l'une des revendications 1 à 3 pour le traitement d'un liquide (8) chargé en substances.
